Europäisches Patentamt

**European Patent Office**

**Office européen des brevets**

(11) Publication number:

**0 122 241**
A1

(12) **EUROPEAN PATENT APPLICATION**

(21) Application number: **84850069.0**

(22) Date of filing: **02.03.84**

(51) Int. Cl.³: **G 01 D 11/30, G 12 B 9/08 // G04B37/14**

(30) Priority: **16.03.83 SE 8301429**

(43) Date of publication of application: **17.10.84 Bulletin 84/42**

(84) Designated Contracting States: **AT BE CH DE FR GB IT LI LU NL SE**

(71) Applicant: **Edwall, Karl-Axel Gunnar, Haga Kyrkogata 28 A, S-411 23 Göteborg (SE)**

(72) Inventor: **Edwall, Karl-Axel Gunnar, Haga Kyrkogata 28 A, S-411 23 Göteborg (SE)**

(74) Representative: **Barnieske, Hans Wolfgang, S:ta Ragnhildsgatan 24-26 P.O. Box 25, S-151 21 Södertälje1 (SE)**

(54) **Pivotable holder for instruments.**

(57) Pivotable holder for application of a visually readable instrument on a flat, vertical plane (8), so that the instrument can be turned to one position to be read from the front and to a second position to be read from below with the body transverse to the vertical surface and the head nearest the surface. The holder comprises a relatively stiff hinged joint (3) which connects a member (1) joined to the instrument, to a plate (2), said plate being stiffly rotatable either directly or indirectly at its attachment point to the vertical surface, about an axis substantially perpendicular to the plate (2) and to the axis of the joint (3).

EP 0 122 241 A1

## Pivotable holder for instruments

The present invention relates to a holder, adjustable
to at least two positions, for application of a visually
readable instrument on a flat, vertical plane, such as
a wall.

Holders of this type are already known in the form of
a long, flexible arm, for instance, the instrument being
secured to the free end of the arm. Holders with magnetic
devices are also known.

The primary object of the present invention is to effect
a holder of the type described which permits the instruments to be turned to one position for normal reading
from the front, and to another position for normal
reading from below, from a recumbent position with the
body transverse to the flat, vertical surface and the
head nearest the surface. Such a holder should be compact,
esthetically pleasing, simple to adjust, simple to attach
to the instrument, simple to attach to the wall and inexpensive to manufacture.

These objectives are achieved by means of a holder having
the features defined in the claims.

The holder according to the invention thus comprises a
member joined to the instrument, connected to a plate 2
by means of a relatively stiff hinged joint permitting
the instrument to be swung between a (horizontal) position
substantially perpendicular to the plate and a (vertical)
position in alignment with the plate. The plate is
attached in and essentially parallel to the flat, vertical surface (in the following termed the "wall"), so that
said plate can be stiffly rotated at least a half
turn about an axis substantially perpendicular to the
plate, to the wall and to the axis of the above-mentioned
joint. The instrument attached to the holder can thus be
swung from its normal position facing forwards, to a
horizontal position and thereafter be rotated a half
turn, into a position for normal reading from below
from a recumbent position with the body transverse to
the wall and the head close to the wall.

The invention will now be described in detail with
reference to embodiments shown in the accompanying
drawings, in which

Figure 1    shows a cross section of a first embodiment
            of the holder with the instrument attached
            and positioned for reading from the front;

Figure 2    shows a cross section of the embodiment in Figure 1 positioned for reading from below;

Figure 3    is a cross section of the embodiment in Figure 1
            positioned for reading from the front, with
            the addition of an adjustable bracket for
            securing the instrument, and

Figure 4    is a cross section showing an alternative
            embodiment of the member for attaching the
            instrument.

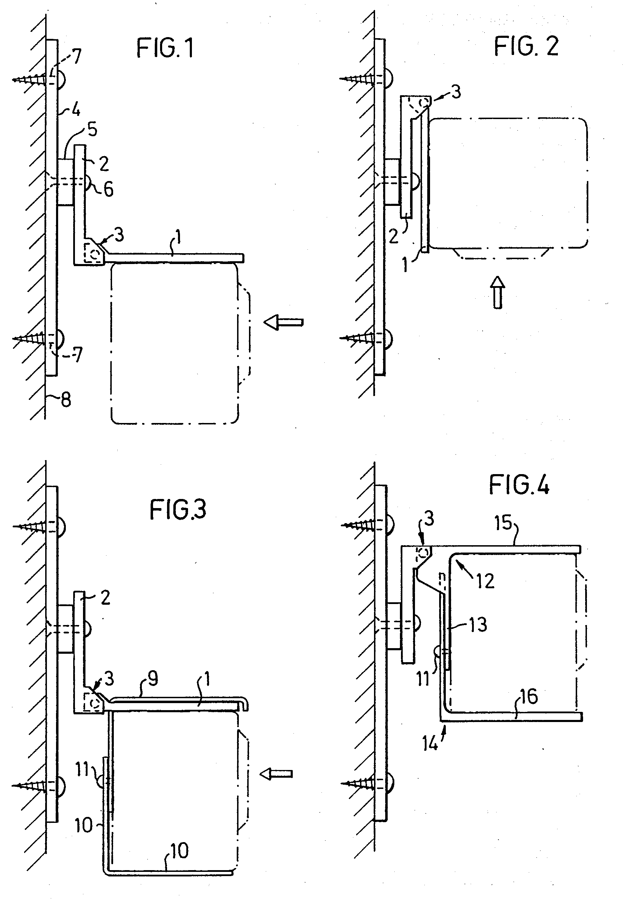

In Fig 1 the upper side of an instrument for visual
reading (shown in broken lines) is attached along the
lower side of the first plate 1 of the holder, positioned so that the instrument can be read from the front in the direction of the arrow. The instrument may be a clock, a clock-radio, an ordinary radio receiver, a compass or a thermometer. The instrument may be attached to the plate 1 by means of double-sided tape, glue or elastic bands. Attachment is preferably achieved by means of Velcro® tape or the like, a strip being attached both to the lower side of the plate and the preferably flat upper side of the instrument. The instrument can then easily be removed from the holder.

One edge of the first plate 1 is connected to the edge of a second plate 2 by means of a stiff hinged joint 3. The joint 3 may comprise a hinge all along the edges of the plates abutting each other. However, as shown schematically in the drawings, the joint is preferably formed by the two plates being provided with lugs protruding perpendicularly to the plates at the two ends of these edges. The distance between the lugs on the two plates should deviate somewhat to enable the lugs on one plate to be inserted between and close to the lugs on the other plate. Holes are provided in the lugs enabling them, with an elastic spacer between, to be secured pairwise by means of a rivet inserted in the appropriate holes in the lugs and the spacer. The spacer is preferably made of nylon, rubber or similar elastic material and is designed to give the joint a certain stiffness.

The second plate 2 is arranged to be rotated stiffly in its attachment parallel to a third plate 4, the plates, together with an elastic spacer 5 between them, being joined together by a rivet 6. The third plate 4 is provided with holes 7 to enable the plate to be screwed

4      0122241

to the wall 8. This attachment of the second plate 2
enables it to rotate about an axis substantially
perpendicular to the plate 2, the wall 8 and the axis
of the joint 3.

As can be seen in Fig 2 (compare Figure 1 ), the plates
1 and 2 can easily be swung or rotated, respectively, so
that the instrument attached is facing the correct way
to be read from below. There is a certain amount of
resistance to these hinge or rotary movements and the
instrument attached to the holder can therefore also be
directed anywhere between the two outer positions.

As shown in Fig 3, the holder may also be provided with
means for detachable, reinforced attachment of the
instrument to the plate 1, in the form of an adjustable
bracket. The attachment bracket consists of two angle
plates (shanks) 9,10 which can be adjustably secured to
each other by means of a screw 11. This is enabled by a
screw-threaded hole in the angle plate 9 and an elongate
slot in the angle 10, said slot being slightly narrower
than the diameter of the screw head. As shown in Figure 3
the adjustable bracket can be simply and detachably
clamped against the plate 1 in the holder, the instrument
at the same time being attached to the holder by a longitudinal slot being arranged along the joint between the
plates 1 and 2. This slot is arranged between the two
lugs in plate 1 and runs parallel to the axis of the
joint. The simplest way of providing the slot is to
extend the lugs on plate 2 to the right in the drawings,
thus enabling the edge of the plate 1 facing the plate 2
to be moved to the right so that a sufficiently wide
space is formed between this edge and the plate 2.

An alternative embodiment of the invention, particularly suitable for somewhat heavier objects, is shown in Figure 4. According to this embodiment the plate 1 is replaced by an angle plate 12, a second angle plate 14 being displaceably arranged in one shank 13 by means of screws 11, for instance. An attachment bracket is thus produced having shanks 15, 16, which can be adjusted within wide limits for various instruments and which is capable of supporting even relatively heavy instruments or apparatus.

The drawings illustrate the situation when the upper side of an instrument is secured to the lower side of the plate 1. However, the holder according to the invention permits numerous other methods of attaching the instrument. For example, in Fig 1 the rear of the instrument might be secured to the lower side of the plate 1 so that the instrument is positioned for reading from below. In this case the instrument will be positioned for reading from the front when the holder is positioned as shown in Figure 2.

Additional possibilities are offered if the plate 1 in Figure 1 can also be swung down to a position parallel to the wall (i.e. can be swung through an angle of $180^{\circ}$ in relation to the plate 2). In this case the upper side of the plate 1 can instead be used for attachment to the upper side or rear of the instrument while retaining the function of the holder. In this case, too, the attachment can be strengthened by means of a bracket of the type described above, but facing in the opposite direction.

The plates 1, 2 and 4 are shown from the side in the drawings and their actual shape is therefore not revealed. This shape may be rectangular, triangular, circular, etc. In a preferred embodiment the plate 1 is rectangular, the plate 2 triangular and the plate 4 circular, but many other combinations of shapes are naturally possible. The plates may be manufactured from brass, steel, aluminium or plastic, for instance, and are preferably relatively thin so that when folded in (Figure 2) the holder takes very little space.

In the embodiment shown in the drawings, the second plate 2 is attached in a plate 4 allowing the plate 2 to rotate stiffly. The plate 4 is in turn attached to the wall. It is of course possible to attach the plate 2, to rotate stiffly, directly to the wall by means of a screw, for instance, and an intermediate resilient spacer. The attachment of the instrument to the plate 1 is preferably effected at manufacture, for instance by drilling screw-threaded holes in the casing of the instrument and in the plate 1 of the holder, so that the instrument can easily be screwed to the holder.

The holder according to the invention is particularly suitable for attaching an alarm-clock or clock-radio above a bed and has the advantage of not having any protruding arms, while at the same time being simple to secure to many different types of casings for such clocks.

## C l a i m s

1.   Holder, adjustable to at least two positions, for application of a visually readable instrument on a flat, vertical plane (8), characterized in that it comprises a member joined to the instrument, said member (1) being connected to a plate (2) by means of a relatively stiff hinged joint (3) permitting the instrument to be swung between a (horizontal) position substantially perpendicular to the plate (2) and a (vertical) position in alignment with the plate (2), said plate (2) being attached in and essentially parallel to the flat, vertical surface (8), so that said plate (2) can be stiffly rotated at least a half turn about an axis substantially perpendicular to the plate (2), to the flat, vertical surface (8) and to the axis of the joint (3), enabling the instrument to be moved to a position for normal reading from the front and, after pivoting a quarter turn and turning the plate (2) a half turn, into a position for normal reading from below from a recumbent position with the body transverse to the vertical, flat surface and the head nearest the surface.

2.   Holder according to claim 1,  characterized in that the plate (2) is attached in the flat, vertical surface (8) in a manner permitting it to rotate stiffly, the plate (2) being rotatably secured to, and substantially parallel to, a second plate (4) by means of a rivet, bolt or the like (6) passing through both plates, with a resilient washer (5) located between the plates, the second plate (4) being provided with holes (7) for attachment to the flat, vertical surface (8).

3.   Holder according to claim 1 or 2, characterized in that the member joined to the instrument consists of a joint-section made in one piece with the instrument, for insertion into the relatively stiff joint (3).

4.    Holder according to claim 1 or 2, characterized in that the member joined to the instrument consists of a first angle plate (12) in one shank (13) of which is displaceably arranged a second angle plate (14) forming a bracket with projecting shanks (15,16) between which the instrument is inserted.

5.    Holder according to claim 1 or 2, characterized  in that the member joined to the instrument consists of a third plate (1) for attachment to the top or rear side of the instrument, said plate (1) being hinged to the first-mentioned plate (2) parallel to the vertical surface (8).

6.    Holder according to claim 4, characterized in that a longitudinal slot is arranged in the joint (3) between the third (1) and the first plate (2) and parallel to the axis of the joint (3), for insertion and securing of one shank (9) of an adjustable bracket for the instrument against one side of the third plate (1).

0122241

1/1

FIG.1

FIG. 2

FIG.3

FIG.4

0122241

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 511 165 (K.K. SEIKOSHA) * Figures 1-3; page 1, line 13 - page 3, line 6; page 3, line 34 - page 5, line 3 * | 1-3,5 | G 01 D 11/30 G 12 B 9/08 // G 04 B 37/14 |
| Y | GB-A- 622 704 (KERNEY) * Figures 1-3; page 3, lines 20-31; page 3, lines 39-126 * | 1-3,5 | |
| A | DE-A-2 949 867 (AGFEO GmbH & CO. KG) * Figures 1-4; page 5, lines 1-10; page 6, lines 1-13; page 8, line 1 - page 11, line 22 * | 1 | |
| A | FR-A-2 414 678 (C.A. MOON [HOLDINGS] LTD.) * Figures 1-3; page 2, lines 2-31 * | 4 | TECHNICAL FIELDS SEARCHED (Int. Cl. ³) |
| | ----- | | G 12 B 5/00 G 12 B 9/00 G 01 D 11/00 F 16 M 11/00 G 04 B 37/00 |

The present search report has been drawn up for all claims

| Place of search | Date of completion of the search | Examiner |
|---|---|---|
| THE HAGUE | 27-06-1984 | DRYSDALE N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82